# EUROPEAN PATENT APPLICATION

(11) **EP 4 796 971 A1**
(43) Date of publication of application: **26.08.2026**
(21) Application number: 26158810.7
(22) Date of filing: 16.02.2026
(51) Int. Cl.: G02B 6/44, G01H 9/00, G01D 5/26, G01L 1/24

(54) **OPTICAL FIBER CABLE**

(30) Priority: 25.02.2025 IT 202500003633
(71) Applicant: Prysmian S.p.A., 20126 Milan (IT)
(72) Inventor: Bechis, Massimo, 20126 Milano (MI) (IT); Floris, Ignazio, 20126 Milano (MI) (IT)
(74) Representative: Riccardi, Elisa

(57) **Abstract**

An optical fiber cable (10) comprising an optical core (12) comprising at least one tube (14) containing at least one optical fiber (16). At least one protecting layer (42, 44) surrounding the optical core (12) is made of an elastomeric polymer material. The elastomeric polymer material has a density of from 1.2 to 1.4 g/cm³. The elastomeric polymer material has Shore A hardness of at most 70.

## Description

### TECHNICAL FIELD

The present disclosure relates to an optical fiber cable.

The optical fiber cable may be a stand-alone cable or it may be integrated within a power cable, an optical cable or a hybrid (power and optical) cable.

The present disclosure further relates to a system and a Distributed Acoustic Sensing listening system, comprising such optical fiber cable.

### BACKGROUND ART

Optical fiber cables for data transmission generally include an optical core including one or more optical fibers, encased by a protective and strengthening structure made of various materials.

For example, US4515435A relates to a fiber optic cable for directly transmitting visible light signals having a plurality of optical fibers that are each sheathed in an extruded layer of polymeric elastomer. The sheathed fibers are cabled in a long lay length around an axial core member that adds some tensile strength to the cable. Tape is wrapped around the cabled, sheathed fibers, and an inner jacket is extruded therearound. High strength yarn is braided around the inner jacket providing tensile strength to the cable, and an outer jacket of rigid polymeric material surrounds the braid. The Shore A of the elastomer is between about 64 and about 68 at 23° C., 10 sec as measured on an ASTM D2240-Durometer. The inner jacket should have a Shore D of between about 34 and about 39 as measured on an ASTM D2240-Durometer at 23° C., 10 sec. A polymer suitable for forming the outer jacket should have a Shore D between about 60 and about 66 as measured on an ASTM D2240-Durometer at 23 DEG C., 10 sec.

As another example, in the field of long-distance transmission optical cables, CN115480352 relates to a self-supporting optical cable comprising a plurality of optical units evenly distributed around a first reinforcing member and coated with a first elastic body. The first elastic body is made of thermoplastic elastic material and its outer wall has a plurality of circumferentially distributed fitting grooves. Second elastic bodies are spirally arranged and respectively embedded in the plurality of fitting grooves. An inner sheath is wrapped on the outside of the plurality of second elastic bodies; an outer sheath is wrapped outside of the sheath inner; a plurality of second reinforcements is pierced inside the outer sheath. The first elastomer Shore hardness (HA) is between 65 and 90, density between 1.1 g/cm³ and 1.2 g/cm³, tensile strength greater than or equal to 45 MPa; the second elastomer has the Shore hardness between 45 and 65, the tensile strength is greater than or equal to 30MPa.

Optical fiber cables are increasingly used for monitoring temperature, strain, pressure, vibrations and other quantities at the end of or along a path. Interferometric technique and/or other techniques allow measuring the desired quantities and/or parameters related thereto, thus allowing distributed measurement and monitoring, besides remote (even long distance) measurement and monitoring.

Briefly stated, the temperature, strain, pressure, vibration, etc. -as well as changes thereof- to which the monitored path is subject modulate the intensity, phase, polarization, wavelength and/or transit time of light in the optical fiber and/or cause physical phenomena, such as for example Raman, Brillouin, and Rayleigh scattering, to occur within the optical fiber. An optoelectronic device, for example an interferometer, may be used to detect and/or measure the physical phenomena to provide information on the monitored quantity, such as for example its magnitude, its frequency, the location of the monitored quantity source along the monitored path, etcetera.

Optical fiber sensing has several applications in various fields.

One example application is monitoring the integrity and/or conditions of a power cable and/or data transmission cable, of a pipeline, an oil well cable, or other system, along which one or more sensing optical fiber(s) extend.

Another example of application of optical fiber cables is in a Distributed Acoustic Sensing (DAS) listening system, e.g., as an ambient microphone.

CN116736455 relates to an all-dielectric acoustic wave sensing optical cable including a reference optical unit, a damping layer and a sheath layer arranged sequentially from the inside to the outside along the radial direction of the optical cable; wherein, a test light unit is also provided in the sheath layer, and the test light unit is located outside the damping layer. A sensitizing layer is also provided within the sheath layer and is in contact with the test light unit. The material used in the sensitizing layer includes one or more of polyester elastomer, polyurethane elastomer and nylon elastomer. The materials used in the damping layer may include one or more of thermoplastic vulcanized rubber TPV, high damping rubber, modified silicone rubber. The elastic modulus of the material used in the damping layer is 1MPa~10MPa, the tensile strength is 5MPa~30MPa, and the elongation at break is 400%~ 1000%, the loss factor is 0.45~1.0. The sheath layer is a flame-retardant sheath layer of an optical cable. The materials used in the sheath layer include flame-retardant polyolefin, flame-retardant polyester elastomer, flame-retardant polyurethane elastomer and flame-retardant polystyrene and may have hardness greater than Shore hardness 55D, sliding friction coefficient less than 0.25.

According to CN116736455**,** distributed optical fiber acoustic sensing technology (DAS) is based on phase-sensitive optical time domain reflection technology to detect and locate acoustic waves and weak vibration signals. In environments such as subways, tunnels and bridges, sound waves often appear simultaneously with vibration signals. Using existing sensing optical cables, DAS technology cannot distinguish whether the signal is an acoustic wave signal or an environmental vibration signal. There is a problem that the detection range of the acoustic wave sensing optical cable is small, and the environmental vibration signal sensed by the sensing system falsely alarms into an acoustic wave signal. Furthermore, the overall design is said to allow the overall sound pressure sensitivity of the acoustic wave sensing optical cable to be greatly improved.

### TECHNICAL PROBLEM

The Applicant has noticed that the measurement of acoustic signals through an optical fiber cable may be disturbed and its reading impaired by sources external to the system to be monitored, notably by acoustic noise. The optoelectronic device is oftentimes placed at a distance from an end of the sensed or monitored system, in a noisy environment, and should be connected to the sensing optical fiber(s) laid along the sensed or monitored system through another optical fiber cable, which is also subject to the noisy environment.

The Applicant further recognized that in a DAS listening application, it may be desirable to selectively exclude one or more areas of the listened system, e.g. for privacy reasons or noise exposure reduction.

In either case, it has been determined that an optical fiber cable having low sensitivity to acoustic waves, or at least to acoustic waves in the frequency range 1000-12000 Hz would be desirable.

Applicant faced the technical problem of providing such an optical fiber cable having low sensitivity to acoustic waves different from those originated in the system to be monitored, at least in the frequency range 1000-12000 Hz.

### SUMMARY

The Applicant has perceived that the above-mentioned problem may be solved by making at least one layer encircling the optical core of an optical fiber cable from an elastomeric polymer material having a predetermined density and hardness.

The density of a material is, as is well known, the mass of a substance per unit volume, and is typically measured in g/cc, where 1 g/cc = 1000 kg/m³ according to, for example, ISO 1183-1 (2004).

The hardness of a material is, as well known, a measure of the resistance of the material to localized plastic deformation, indentation in the case of Shore hardness. Shore hardness, using either the Shore A or Shore D scale, is the preferred method for rubbers and thermoplastic elastomers, where Shore A scale is used for 'softer' rubbers while the Shore D scale is commonly used for 'harder' ones. The values of Shore hardness A mentioned in the present disclosure and claims are measured by applying the standard test method defined by ASTM D-2240 (2010).

Specifically, the Applicant found that a cable comprising a layer of elastomeric polymeric material having high density, but a low Shore A hardness, acoustic pressure on the optical fiber(s) of the optical core may be sensibly lowered in a wide range of frequencies of acoustic disturbance, such as acoustic waves generated from a source located in the proximity of the optical fiber cable.

The optical fiber cable disclosed herein is much less sensitive or insensitive at all to undesired acoustic waves and/or acoustic noise.

The optical fiber cable disclosed herein may, accordingly, be used e.g. to obtain more accurate measurements, which are substantially unaffected by the ambient noise; it may also be used to create lengths along a DAS listening system, used e.g. as an ambient microphone, such lengths being deaf to environmental sounds.

According to a first aspect, the present disclosure relates to an optical fiber cable comprising an optical core comprising at least one tube containing at least one optical fiber. The at least one optical fiber cable comprises at least one protecting layer around the optical core that is made of an elastomeric polymer material. The elastomeric polymer material has a density of from 1.2 to 1.4 g/cm³ measured according to ISO 1183-1 (2004). The elastomeric polymer material has Shore A hardness of at most 70 measured according to ASTM D-2240 (2010).

In the present description and in the attached claims:
- all of the numerical magnitudes indicating amounts, quantities, percentages, and similar shall be deemed to be modified by term "about", unless otherwise indicated, and each range for which a lower and upper limit(s) are given shall be deemed to include all of the possible combinations of those limits, limits included and all of the possible intermediate ranges, besides those specifically indicated;
- the words "a" or "an" should be read to include one or at least one and the singular also includes the plural unless it is obvious that it is meant otherwise;
- term "layer" indicates a cable element which, in cross-section, is evenly distributed about a longitudinal axis;
- term "sheath" indicates the outermost layer of the cable;
- term "acoustic pressure" indicates the local pressure deviation from the ambient atmospheric pressure, caused by a sound wave, and it is measured in pascal (Pa);
- term "radial" means a direction extending perpendicular to a reference longitudinal axis or centerline of the cable;
- expressions "radially inner", "radially innermost", "radially outer" and "radially outermost" refer to relative or absolute positions taken along a radial direction with respect to the longitudinal axis of the cable, inner/innermost meaning closer to the longitudinal axis, and outer/outermost meaning farther away from the longitudinal axis;
- term "surround" and its derivatives mean "in a radially external position with respect to", without implying any concentricity and without necessarily implying direct contact;
- expressions "in direct contact", "directly contacting" and their derivatives mean without the interposition of any component.

The elastomeric polymer material may have Shore A hardness from 30 to 70. In an embodiment, the present elastomeric material has Shore A hardness between 30 and 40.

The elastomeric polymer material of the present disclosure may be selected from natural rubbers, styrene-butadiene rubbers, thermoplastic elastomers (for example ethylene-propylene diene monomer, EPDM), thermoplastic polyurethanes.

The optical fiber cable may include a sheath as outermost cable layer, a layer surrounding the optical core and radially inner to the sheath (sometimes referred to as inner layer for the sake of brevity), and, optionally, a reinforcement layer surrounding the optical core and radially inner to the sheath.

The at least one protecting layer may be the inner layer and/or the sheath.

In an embodiment, the reinforcement layer comprises glass fibers or aramid yarns.

The sheath, made of a polymeric material which may be the elastomeric polymer material according to the present disclosure, may be added with an additive selected from a flame-retardant additive, for example a halogen-free polymer material, for example a low smoke halogen-free (LS0H) polymer material. Alternatively or additionally to a flame retardant additive, the sheath may include a UV shielding additive and/or a scratch-resistant additive.

The at least one optical fiber may be loosely contained within the at least one tube. The tube(s) containing the optical fiber(s) may contain an element/s capable of absorbing hydrogen, such as filaments or a gel or a thixotropic filling compound.

The optical core 12 may further include one or more water swellable elements and/or a water swellable compound in form of, for example, filaments or a gel or a thixotropic filling compound.

The optical core may further comprise a central strength member, for example made of fiber reinforced plastic material (FRP), for example glass fiber reinforced plastic material (GRP).

The at least one tube containing at least one optical fiber may comprise a plurality of tubes, for example provided around the central strength member. The plurality of tubes may be provided parallel to a cable longitudinal axis or may be helically wound or SZ-stranded, for example around the central strength member.

The optical fiber cable may further include a tape, for example made of polyester, surrounding the optical core and in direct contact thereto.

The optical fiber cable may be dielectric, i.e. free from any metal component. When dielectric, the optical fiber cable needs not be grounded at any junction.

By way of examples, the optical core may comprise:
a) a single optical fiber in a single tube or
b) two optical fibers in a single tube or
c) two tubes each containing a single optical fiber.

Configurations b) and c) may be suited to connect to a sensor including a reference optical fiber and a measurement optical fiber; two instances of a cable according to configuration a) may be used for the same purpose.

According to another aspect, the present disclosure relates to a system including a monitored object, at least one sensing optical fiber associated to the monitored object, an optoelectronic device, and an optical fiber cable as discussed above, optically coupling the at least one sensing optical fiber to the optoelectronic device. For example, the monitored object may be a power or optical or hybrid cable, or a pipeline.

According to another aspect, the present disclosure relates to a Distributed Acoustic Sensing listening system including an optical fiber cable system, wherein at least one length of the optical fiber cable system includes an optical fiber cable as discussed above.

In another aspect, the present disclosure relates to a power cable system comprising
- a hybrid cable including at least one electric conductor and at least one sensing optical fiber, for example a high voltage power cable, and
- at least one optical fiber cable as discussed above,
an end of the at least one optical fiber of the optical fiber cable being spliced at an end of the at least one sensing optical fiber of the hybrid cable.

In the present description and in the attached claims:
- expression "high voltage (HV) cable" means voltages of at least 40kV.

The present disclosure, in at least one of the aforementioned aspects, can be implemented according to one or more of the present embodiments, optionally combined together.

### BRIEF DESCRIPTION OF DRAWINGS

Further features and advantages of the present disclosure will be more clearly apparent from the following detailed disclosure of some embodiments thereof, made with reference to the attached drawings, wherein:
- FIG. 1 diagrammatically shows a cross-section of an optical fiber cable according to the present disclosure;
- FIG. 2 diagrammatically shows a portion of a power transmission installation including an optical fiber cable according to the present disclosure;
- FIG. 3 diagrammatically shows a DAS listening system including an optical fiber cable according to the present disclosure;
- FIGs. 4 and 5 collectively show, diagrammatically, a first example configuration for testing an optical fiber cable;
- FIGs. 6a and 7a shows a plot of acoustic pressure versus acoustic wave frequency for a standard optical fiber cable; and
- FIGs. 6b and 7b shows a plot of acoustic pressure versus acoustic wave frequency for an optical fiber cable according to the present disclosure.

### DETAILED DESCRIPTION OF EMBODIMENTS

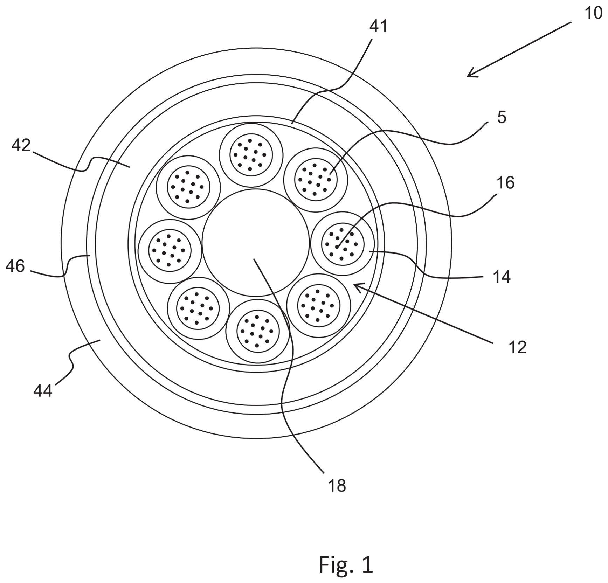

In **FIG. 1** an optical fiber cable 10 is shown, schematically, in cross-section and not to scale, only by way of an example of an optical fiber cable according to the present disclosure.

The optical fiber cable 10 comprises an optical core 12 and a sheath 40 surrounding the optical core 12. The optical core 12 includes a plurality - in the case eight - of tubes 14 each containing a plurality - in the case twelve - of optical fibers 16.

Each optical fiber 16 may be for example a single mode optical fiber.

The optical core 12 may include less than eight tubes 14 down to a single tube 14. The optical core 12 may include more than eight tubes 14.

Each tube 14 may contain less than twelve optical fibers 16 down to two or a single optical fiber 16.

In case there are more than one tube 14, the number of optical fibers 16 may be different from tube to tube.

The number of optical fibers 16 of the optical core 12 may for example range from one to 96, for example from two to 96; for example, the number of optical fibers may be 1, 2, 12, 24, 48, or 96.

One to two optical fibers 16 suffice, for example, to connect an optoelectronic device, for example an interferometer, to a monitored system or object. When two optical fibers are needed, for example to be used as a measurement one and as a reference one, a single optical fiber cable 10 including two optical fibers 16, or two optical fiber cables 10 each including one single optical fiber 16 may be used.

The tube(s) 14 is/are made of a thermoplastic material, for example polybutylene terephthalate (PBT).

The optical fiber(s) 16 is/are loosely arranged within the relevant tube 14. The tube(s) 14 containing the optical fiber(s) 16 may contain a material 5, for example, a hydrogen- or water-absorbing material in form of filaments or optionally thixotropic gel.

The optical core 12 includes a central strength member (CSM) 18 to provide mechanical strength to the optical fiber cable 10.

The CSM 18 may be made of fiber reinforced plastic material, for example glass fiber reinforced plastic material.

The tubes 14 may be longitudinally provided, helically wound or SZ-stranded, around the CSM 18.

The tubes 14 may be in direct contact with the CSM 18.

The CSM 18 is an optional cable element. Different mechanically reinforcing element may be present in the cable of the disclosure, for example one or more strength member(s) made, e.g., of FRP material, may be embedded in one layer outer to the core 12.

The optical core 12 may further include one or more water swellable elements and/or a water swellable compound in form of, for example, filaments or a gel, to provide water tightness to the optical fiber cable 10. The gel and/or filaments may fill the gaps between the tubes 14 and/or between the tubes 14 and the CSM 18.

A tape 41, for example a polyester tape, may be wrapped around the optical core 12, in direct contact thereto.

The tubes 14 may be in contact with the tape 41 as shown.

The inner structure of the optical core 12 may overall depart even sensibly from that shown in Fig. 1.

At least one protecting layer of the optical fiber cable 10, is made of an elastomeric polymer material having a density of from 1.2 to 1.4 g/cc and a Shore A hardness of at most 70.

As discussed above, the Applicant found that using such a material, the acoustic pressure (i.e. the local pressure deviation from the ambient atmospheric pressure, caused by a sound wave) on the optical fiber(s) 16 of the optical core 12 may be sensibly lowered over a wide range of frequencies of an acoustic disturbance or undesired acoustic wave, such as an acoustic wave issued from a source located in the proximity of the optical fiber cable 10. Reference may also be made to the examples discussed further below.

The Shore A hardness of the least one protecting layer may be from 30 to 70. In an example this Shore A hardness ranges from 30 to 40.

In an embodiment, the elastomeric polymer material of the least one protecting layer according to the present disclosure has Young elastic modulus of from 1 to 5 MPa, according to ASTM E111-04 (2010).

In an embodiment, the elastomeric polymer material of the present disclosure may be selected from natural rubbers, styrene-butadiene rubbers, thermoplastic elastomers (for example EPDM), thermoplastic polyurethanes.

In the embodiment shown, the optical fiber cable 10 includes a sheath 44, a layer surrounding the optical core 12 and radially inner to the sheath 44, referred to as inner layer 42 below, and a reinforcement layer 46. According to the disclosure, the inner layer 42 and/or the sheath 44 are protecting layers of the cable according to the present disclosure.

The reinforcement layer 46 may be made of fiber, for example glass fiber reinforced plastic (wherein the plastic may be an epoxy, vinyl ester, or polyester thermosetting plastic) or of aramid yarns, optionally embedded in a plastic. The reinforcement layer 46 may be provided in radially outer position with respect to the inner layer 42 as shown, or between the inner layer 42 and the optical core 12 in radially outer position with respect to the optionally present tape 41.

At least one of the cable protecting layers, i.e. at least one of the inner layer 42 and the sheath 44, is made of an elastomeric polymer material according to the present disclosure. In the case of the sheath 44, which is the radially outermost layer of the present cable, such elastomeric polymer material may be added with one or more additive(s) selected from flame-retardant, optionally halogen free, additive, UV shielding additive and a scratch-resistant additive.

When the inner layer 42 is made of a material different from the elastomeric polymer material of the present disclosure, it may be made of a polyolefin, for example a polyethylene.

When the sheath 44 is made of a material different from the elastomeric polymer material of the present disclosure, it may be made of a polyolefin, for example a polyethylene, added with one or more additive(s) selected from flame-retardant, optionally halogen free, additive, UV shielding additive and a scratch-resistant additive.

In an embodiment, the optical fiber cable of the present disclosure may include further layers provided between the optical core or the tape, if present, and the sheath. At least one of the further layer(s) may be made of an elastomeric polymer material according to the present disclosure.

In an embodiment, the optical fiber cable of the present disclosure may include only one layer (in the following referred to as "solo layer") surrounding the optical core and, if present, the tape. The solo layer is made of the herein disclosed elastomeric polymer material having the above values of density and hardness. As the solo layer also performs the function of the outermost cable layer, i.e. of the sheath, its material may comprise a flame-retardant additive and/or a UV shielding additive and/or a scratch-resistant additive.

It is emphasized that the optical fiber sensor cable of the present disclosure is dielectric, thus not requiring to be grounded at junctions.

Although bearing the same reference number 10 throughout the drawings and related description, it should be understood that optical fiber cable in each of the figures is not limited to the specific example one shown in Fig. 1, rather its structure may depart therefrom, provided that it includes the features that are recited in the independent claim 1.

An optical fiber sensing cable according to the present disclosure may be manufactured in several ways according to techniques known to the skilled person.

The optical fiber cable may be used to connect an optoelectronic device, for example an instrument of measurement, such as an interferometer, to a monitored cable comprising at least one sensing optical fiber, such as communication cable, a power cable, a hybrid cable comprising electric conductor(s) and optical fiber(s).

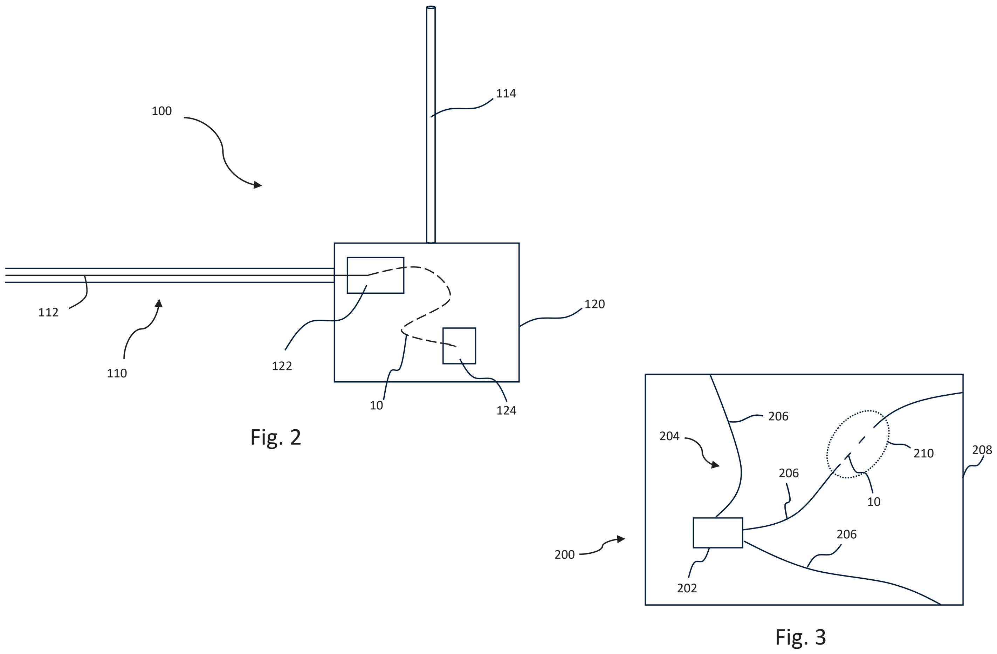

**In** **FIG. 2****,** a portion of a power transmission installation 100 including an optical fiber cable 10 according to the present disclosure is schematically shown, merely by way of a non-limiting example of industrial application of the disclosure.

The installation 100 includes a monitored cable 110, specifically a power cable including at least one electric conductor (not shown) and at least one optical fiber 112. Monitored cable 110 may be, for example a three-core, high voltage power cable. Monitored cable 110 may be part of a power and, optionally, data distribution infrastructure, for example a cable for land application - including underground and aerial application - or a cable for submarine application, etc.

At least one of the optical fibers 112 integrated within the monitored cable 110 is used for sensing; one or more optical fibers 112 used for data transmission may also be present.

At an electrical substation 120 (or at another suitable place), the electrical and optical portions of the monitored cable 110 are separated from one another. The electrical conductor(s) of the monitored cable 110 is/are electrically connected, in a manner not shown for the sake of simplicity, to a power cable 114 of the power distribution infrastructure, e.g. via an AC/DC converter station.

The sensing optical fiber(s) 112 of the monitored cable 110, is/are optically coupled, for example spliced within a junction box 122, with one end of the optical fibers (16) an optical fiber cable 10 according to the present disclosure.

Another end of the optical fiber cable 10 is optically coupled with an optoelectronic device 124.

The optoelectronic device 124 may be, for example, an instrument such as an interferometer, suitable to detect and/or measure a physical phenomenon taking place in the least one sensing optical fiber 112 of the monitored cable 110 to provide information on a monitored quantity.

For example, a damage in the monitored cable 110 may alter the way light propagates along its sensing optical fiber(s) 112, and interferometric technique may be used to estimate the location of the damage along the monitored cable 110, in a manner *per se* well known to those skilled in the art.

Other optical fibers 112 of the monitored cable 110, if present, may be spliced, possibly within the same junction box 122, with one end of a respective optical fiber of one or more optical cables of the data distribution infrastructure. These junctions and optical cables are omitted from the figure for clarity reasons.

The electrical junction with electrical power cable 114 is omitted from Fig. 2 for clarity reasons.

The electrical substation 120, or other place where the optical coupling, for example splicing, occurs, is generally not acoustically isolated, and may therefore be reached by acoustic noise. For example, the electrical substation 120 may be underground below a street or near a railway or subway, or men at work within or near the electrical substation 120 may operate noisy equipment such as a jackhammer. The optoelectronic device 124 may be several meters, for example a few dozens of meters, away from the spliced end of the monitored cable 110, and it may even be in another room or building. Again, the optical fiber cable 10 may be laid under a road, or in a similarly acoustically harsh environment.

Thanks to the above discussed properties (density and hardness) of the elastomeric polymer layer of the optical fiber cable 10 according to the present disclosure, the way light propagates along its optical fiber(s) 16 is scarcely affected, if at all, by the acoustic noise.

Similar considerations apply if, instead of the monitored hybrid cable 110, another object is being monitored.

The optical fiber cable of the present disclosure may also be used in DAS listening applications, to selectively exclude one or more areas of the listened system.

In **FIG. 3**, a DAS listening system 200 is schematically shown, merely by way of a non-limiting example of industrial application of the disclosure.

DAS listening system 200 includes an optoelectronic device 202 which is optically coupled to an optical fiber sensing cable system 204 including one or more optical fiber sensing cable(s) 206, in order to acoustically survey an environment 208. It is noted that the optoelectronic device 202 is depicted within the environment 208, but it may also be located outside the environment 208.

An area 210 of the environment 208 is, for whatever reason, to be excluded from the acoustic surveillance. To this end, a length of an optical fiber sensing cable 206 running in the excluded area 210 is substituted (e.g. by splicing) with a length of an optical fiber cable 10 according to the present disclosure.

Thanks to the above discussed properties (density and hardness) of the elastomeric polymer layer of the optical fiber cable 10 according to the present disclosure, the way light propagates along the optical fiber(s) 16 of the optical fiber cable 10 is scarcely affected, if at all, by the acoustic waves propagating within area 210. Thus, area 210 is effectively excluded from the acoustic surveillance of the environment 208.

Tests were carried out to show the superior insensitivity to sound of a cable according to the present disclosure.

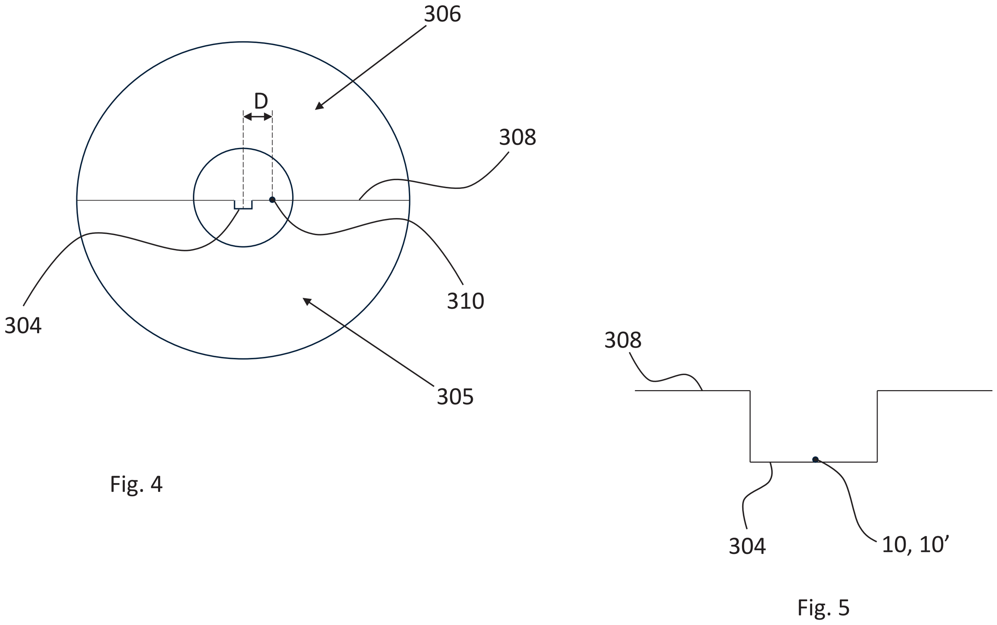

**FIGs. 4** and **5** collectively show a test installation model for an optical fiber cable 10 according to the present disclosure and a standard optical fiber cable 10'. The model was run by Comsol Multiphysics 6.3 (Comsol AB).

Both the optical fiber cable 10 according to the present disclosure and the standard optical fiber cable 10' had a structure similar to that as depicted in **Fig. 1** but comprising six tubes each including two single-mode, 250 µm optical fibers. Both the cables 10 and 10' had an outer diameter of 14 mm.

The optical fiber cable 10 had an inner layer made of an elastomeric polymer material according to the present disclosure which was an EPDM having a Shore A of 50, a Young elastic modulus of 1.49 MPa and a density of 1370 kg/m³. The standard optical fiber cable 10' had no layer made of an elastomeric polymer material according to the present disclosure, all its protecting layers (e.g. inner layer and sheath 44) being made of a polyethylene having a Shore A greater than 100, a Young elastic modulus of 390 MPa and a density of 950 kg/m³.

According to the model, each of the optical fiber cable 10 and the standard cable 10' was loosely accommodated alone at the bottom of a channel 304 which was assumed to be dug into the ground or floor 308 and to have dimensions 500x250 mm.

An acoustic source 310 was modelled as placed on the ground or floor 308 at a given distance D from the position of the tested optical fiber cable at the centerline of the channel 306. The acoustic source 310 was capable of generating an acoustic wave having a frequency variable within the range comprised between 500 Hz and 12.5 kHz. The acoustic wave propagated through the ground (or floor) at a speed of 3200 m/s (according to a ground model of the Comsol library (https://www.comsol.com/material-library). The wave amplitude was 100Paᵣₘₛ.

The model simulated the interaction of the acoustic wave with the solid parts of the optical fiber cable 10 or of the standard cable 10', and computed the acoustic pressure acting on the fiber core of the optical fibers of each of the tested cables as the frequency of the incident acoustic wave varied.

Acoustic pressure measures have been simulated at a distance D of 0.5 m and 1 m from the acoustic source to channel centerline where the cable 10 or 10' was positioned.

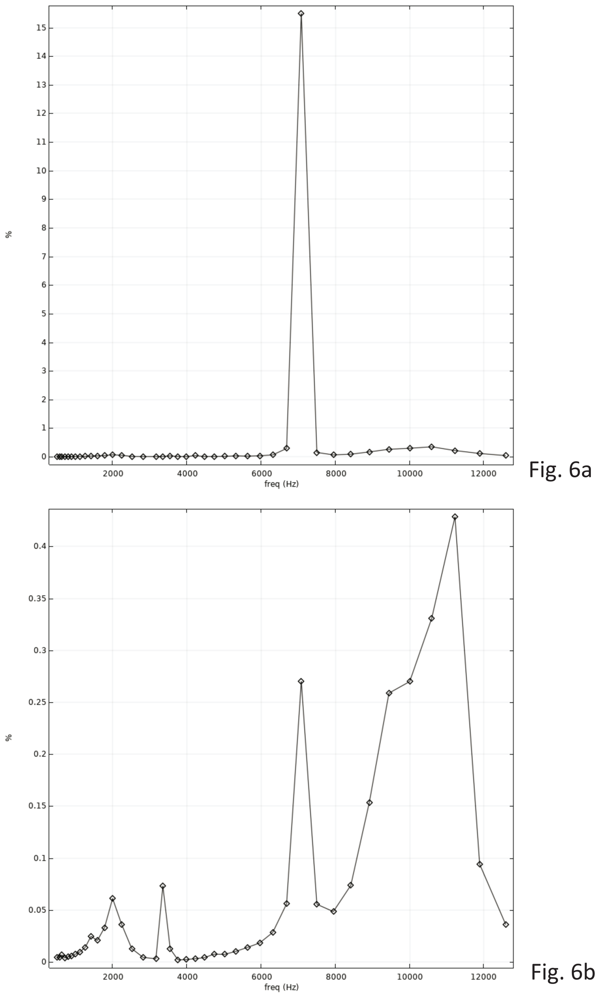

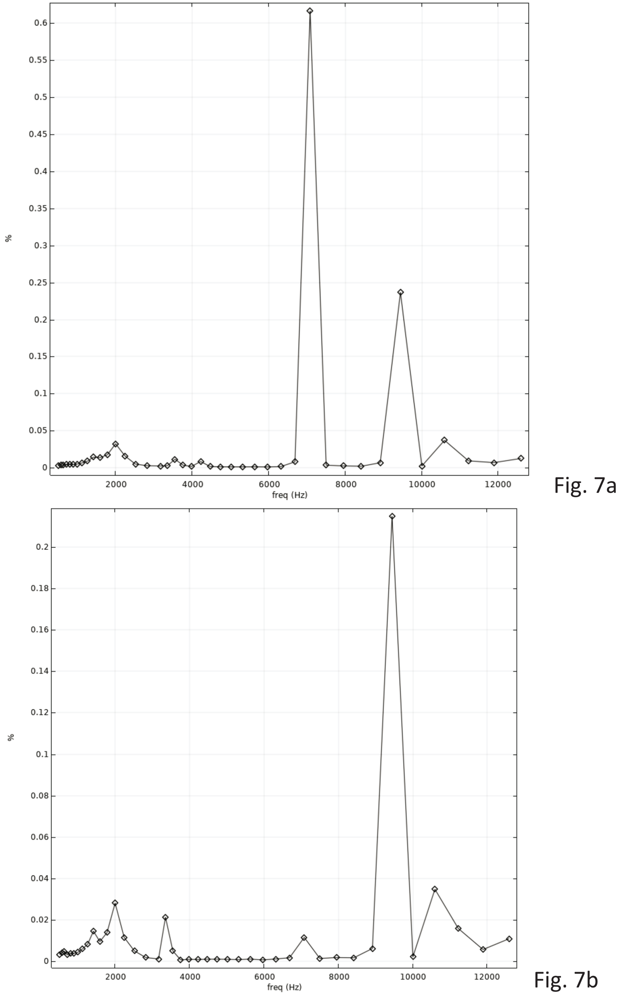

The results are shown in the graphs of **FIG. 6a** and **6b** for D=0.5 m and of **FIG. 7a** and **7b** for D=1 m, wherein in abscissa there is the acoustic wave frequency (Hz) and in ordinate the acoustic pressure on the outer surface of the optical fiber glass core, expressed as percentage ratio between the acoustic pressure on the outer surface of the optical fiber glass core and the acoustic pressure generated by the acoustic source 310. The graphs of **Fig. 6a** and **7a** relate to the standard optical cable 10'; the graphs of **Fig. 6b** and **7b** relate to the optical cable 10 according to the present disclosure. It is noted that the ordinate scales are different.

The results are also summarized in the following **Table.**

**Table**

| | Distance D (m) | Frequency of maximum peak (kHz) | Acoustic Pressure Peak (%) |
|---|---|---|---|
| Cable 10 | 0.5 | 11 | 0.43 |
| | 1 | 9.5 | 0.21 |
| Cable 10' | 0.5 | 7 | 15.4 |
| | 1 | 7 | 0.63 |

The acoustic pressure on the optical fibers of cable 10 resulted much lower than that on the optical fibers of cable 10'. It has to be noted that the peaks of acoustic pressure on the cable 10 of the present disclosure are at frequency values by the edge of the frequency range of interest (1000-12000 Hz).

The same test was also carried out on another optical fiber cable according to the present disclosure differing from the cable 10 above in that it has the sheath and not the inner layer made of an elastomeric polymer material (same EPDM as above) according to the present disclosure. This further cable had an acoustic pressure peak of 0.77% at a frequency of 9.5 kHz, at D=0.5 m, and an acoustic pressure peak of 0.38% at a frequency maximum peak at 9.7 kHz, at D=1 m. Also in this case, the optical fiber cable showed an acoustic pressure lower than that on the standard optical fibers of cable 10'.

## Claims

1. An optical fiber cable (10) comprising an optical core (12) comprising at least one tube (14) containing at least one optical fiber (16),
and at least one protecting layer (42, 44) surrounding the optical core (12) made of an elastomeric polymer material,
wherein the elastomeric polymer material has a density of from 1.2 to 1.4 g/cm³ and Shore A hardness of at most 70.

2. The optical fiber cable (10) according to claim 1, wherein the elastomeric polymer material has Shore A hardness of between 30 and 40.

3. The optical fiber cable (10) according to claim 1, comprising a sheath (44) as outermost cable layer, and a layer (42) surrounding the optical core (12) and radially inner to the sheath (44), wherein said at least one protecting layer (42, 44) is said layer (42).

4. The optical fiber cable (10) according to claim 1, comprising a sheath (44) as outermost cable layer, and a layer (42) surrounding the optical core (12) and radially inner to the sheath (44), wherein said at least one protecting layer (42, 44) is the sheath (44),
and the elastomeric polymer material is added with an additive selected from a flame retardant, a UV shielding additive, a scratch-resistant additive and mixtures thereof.

5. The optical fiber cable (10) according to claim 1, comprising a sheath (44) as outermost cable layer, and a layer (42) surrounding the optical core (12) and radially inner to the sheath (44), wherein said at least one protecting layer (42, 44) includes both said layer (42) and the sheath (44), wherein in the sheath (44) the elastomeric polymer material is added with an additive selected from a flame retardant, a UV shielding additive, a scratch-resistant additive and mixtures thereof.

6. The optical fiber cable (10) according to claim 1, comprising a sheath (44) as outermost cable layer, a layer (42) surrounding the optical core (12) and radially inner to the sheath (44), and a reinforcement layer surrounding the optical core (12) and radially inner to the sheath (44).

7. The optical fiber cable (10) according to claim 1, wherein the optical core (12) further comprises a central strength member (18).

8. The optical fiber cable (10) according to claim 1, further including a tape (41) surrounding the optical core (12) and in direct contact thereto.

9. The optical fiber cable (10) according to claim 1, which is a dielectric cable.

10. The optical fiber cable (10) according to claim 1, wherein the optical core (12) comprises two optical fibers (16) in a single tube (14).

11. The optical fiber cable (10) according to claim 1, wherein the optical core (12) comprises two tubes (14) each containing a single optical fiber (16).

12. A system (100) including:
a monitored object (110),
at least one sensing optical fiber (112) associated to the monitored object (10),
an optoelectronic device (124), and
an optical fiber cable (10) according to claim 1 optically coupling the at least one sensing optical fiber (112) to the optoelectronic device (124).

13. A Distributed Acoustic Sensing listening system (200) including an optical fiber cable system (204), wherein at least one length of the optical fiber cable system (204) includes an optical fiber cable (10) according to claim 1.
